(19) Europäisches Patentamt
European Patent Office
Office européen des brevets

(11) **EP 1 564 418 B1**

(12) **EUROPÄISCHE PATENTSCHRIFT**

(45) Veröffentlichungstag und Bekanntmachung des Hinweises auf die Patenterteilung:
**29.03.2006 Patentblatt 2006/13**

(51) Int Cl.:
**F16B 2/00** (2006.01)

(21) Anmeldenummer: **04003265.8**

(22) Anmeldetag: **13.02.2004**

(54) **Verbindungselement zur kraftschlüssigen Verbindung von Bauteilen**

Connecting element for frictional connection of parts

Elément pour la connection des éléments par friction

(84) Benannte Vertragsstaaten:
**AT BE BG CH CY CZ DE DK EE ES FI FR GB GR HU IE IT LI LU MC NL PT RO SE SI SK TR**

(43) Veröffentlichungstag der Anmeldung:
**17.08.2005 Patentblatt 2005/33**

(73) Patentinhaber:
• **AHC-Oberflächentechnik GmbH & Co. OHG**
  **50171 Kerpen (DE)**
• **Hugo Benzing GmbH & Co.KG**
  **70825 Korntal-Münchingen (DE)**

(72) Erfinder:
• **Urlberger, Hermann H.**
  **40885 Ratingen (DE)**
• **Holländer, Alfons**
  **50170 Buir (DE)**
• **Beisswenger, Uwe**
  **64750 Lützelbach (DE)**
• **Benzing, Christian**
  **70192 Stuttgart (DE)**
• **Hink, Manfred**
  **71635 Ludwigsburg (DE)**
• **Gutscher, Horst**
  **71229 Leonberg (DE)**

(74) Vertreter: **Dunkelberg, Oliver Thomas Michael et al**
**Dunkelberg & Partner**
**Patentanwälte**
**Düsseldorfer Landstraße 249-251**
**47259 Duisburg (DE)**

(56) Entgegenhaltungen:
**EP-A- 0 961 038**          **EP-A- 1 300 485**
**DE-U- 29 521 198**        **US-A- 5 049 165**

**Beschreibung**

Die vorliegende Erfindung betrifft ein Verbindungselement zur reibungserhöhenden spielfreien reversiblen Verbindung von zu fügenden Werksstücken, dessen Verwendung sowie ein Verfahren zu seiner Herstellung.

Die heutigen Anforderungen auf dem Gebiet des Maschinenbaus führen dazu, dass die Konstruktionselemente aus Gründen der Wirtschaftlichkeit und Weiterentwicklung immer höhere Kräfte auf möglichst kleinem Bauraum übertragen müssen.

Vor diesem Hintergrund gibt es ein ständiges Bestreben in Forschung und Industrie, die Grenzen der Übertragungsfähigkeit von kraftschlüssigen Verbindungen zwischen den Fügepartnern, bestimmt durch die Gültigkeit des Coulombschen Reibungsgesetz, durch den Einsatz reibungserhöhender Beschichtungen in neue Größenordnungen zu verschieben.

Die ersten Überlegungen im Hinblick auf reibungserhöhende Beschichtungen gehen zurück auf die Frühzeiten des Maschinenbaus. So wurde schon 1860 empfohlen, Sand in den Fügespalt von Schrumpfverbindungen zu streuen, um den Sitz von Zahnrädern und Wellen zu verbessern.

Dieses Verfahren ist insbesondere angesichts der gesteigerten Anforderungen in Bezug auf Toleranzen und Reproduzierbarkeit von Serienbauteilen auf den heutigen Maschinenbau nicht mehr anwendbar.

Ein weiteres Prinzip zur Erhöhung der Übertragungsfähigkeit kraftschlüssiger Verbindungen geht davon aus, dass einer der beiden zu verbindenden Fügepartner zur Erhöhung der Haftreibung direkt mit einer reibungserhöhenden Schicht belegt wird.

So ist zum Beispiel aus der DE 23 64 275 bekannt, auf eine der zwei zusammenwirkenden Flächen eine Hartstoffkörper enthaltende Schicht durch Aufdampfen, Aufspritzen, Aufsintern oder Diffusion eines Fremdstoffs in die Bauteiloberfläche aufzubringen.

In der Veröffentlichung "Oberflächenschichten für kraftschlüssige Momentübertragung" von H. Peeken, J. Lukschandel et al. in Antriebstechnik (20), 1981, wird auf galvanotechnischem Wege durch gemeinsame Abscheidung feiner Hartstoffkörner mit einer metallischen Bindephase auf Nickel/Phosphor-Basis eine reibungserhöhende Beschichtung erzielt. Die Haftreibung einer Welle-Nabe-Schrumpfverbindung mehr als verdoppelt. Diese Schichten ermöglichen bei Umlaufbiegebelastung sogar noch bessere Haftbeiwerte als bei rein statischer Beanspruchung.

Diese Verfahren, nur eine der zu fügenden Fläche mit einer reibungserhöhenden Beschichtung zu versehen, haben den Nachteil, dass die reibungserhöhende Beschichtung aus Verfahrensgründen nicht auf beide Fügepartner aufgebracht werden kann.

Weitere Nachteile dieser Verfahren sind in deren technischen Machbarkeit zu sehen, denn große komplexe Baugruppen oder Teile, die an großen Elementen angeordnet sind, lassen sich nicht so selektiv veredeln, wie es aus fügetechnischer Sicht geboten ist.

Um dieses Problem zu umgehen wurden die zu fügenden Werkstücke über ein im Fügespalt befindliches Verbindungselement kraftschlüssig verbunden, das aus einem Trägermaterial und darauf mittels verschiedener Verfahren aufgebrachten Hartstoffpartikeln besteht.

So ist aus dem Patent CH-PS 192 197 bekannt, Papier oder Leinen als flexibles Trägermaterial für eine beidseitig aufgebrachte, Hartstoffpartikel enthaltende Schicht zü venrvenden.

Als Wirkmechanismus für die Erhöhung der Haftung wird ein mechanisches Übereinanderschieben keilförmiger Hartstoffpartikel durch Relativbewegung der zu verbindenden Bauteile beschrieben.

Auch die JP 6-147206 offenbart Papier oder Leinen als flexibles Trägermaterial für Hartstoffkörner.

Die in den Schriften genannten Verbindungselemente sind nicht in der Lage, hohe Querkräfte zu übertragen. Sie sind damit für viele Anwendungen ungeeignet.

Ferner ist in der US-A-4 525 098, US-A-4 154 276, US-A-3 828 515 oder US-A-3 692 341 beschrieben, ein leicht verformbares Material geringer Eigenfestigkeit mit darauf aufgebrachten Hartstoffkörner im Fügespalt kraftschlüssiger Verbindungen zu positionieren. Beim Fügen bzw. Verpressen der Bauteile dringen die Hartstoffpartikel in beide Oberflächen ein und übertragen die auftretenden Querkräfte direkt, ohne dass der Trägerfilm an dieser Kraftübertragung beteiligt ist.

Derartige Verbindungen haben zwar den Vorteil, fallweise wieder lösbar zu sein, jedoch bleiben die in die Fügeflächen eingedrungenen Partikel unkontrollierbar in einer der Oberflächen der Fügepartner stecken.

Die reproduzierbare Wiederverwendung der einmal gelösten Verbindung ist dadurch nicht möglich.

Eine weitere Möglichkeit ist in der DE 31 49 596 A1 offenbart, bei der eine Verbindung mit Hilfe grober Hartstoffkörper hergestellt wird. Es ist die Verwendung einer elastischen Trägerfolie aus einem verformbaren Material beschrieben, die selbst nicht an der Kraftübertragung teilnimmt.

Nachteiligerweise ist diese Verbindung unlösbar und ermöglicht somit keine reversible Verbindung der zu fügenden Werkstücke.

In jüngster Zeit hat die Entwicklung in Richtung der maximalen Leistungsdichte von Maschinenbauteilen insbesondere in der Automobilindustrie dazu geführt, dass auch bei kritischen Teilen auf dem Gebiet der Motorenentwicklung, beispielsweise bei stark torsionsbelasteten Verbindungen zwischen Kurbelwelle und Schwingungsdämpfer samt Synchronisationsscheibe, die

Leistungssteigerungen der Motoren von bis zu 30 % nur mit solchen kraftschlüssigen Fügeverbindungen unter Verwendung von mit Hartstoffen beschichteten Verbindungselemente erzielt werden konnten.

Ein für diesen Verwendungszweck speziell entwickeltes Verbindungselement ist in der EP 0 961 038 B1 beschrieben. Es besteht aus einer federelastischen Folie aus metallischem Material, wobei die federelastische Folie an ihrer Oberfläche Hartstoffpartikel definierter Größe aufweist, die mittels einer Nickel/Phosphor-Schicht fixiert sind. Die auf diesem Verbindungselement aufgebrachte, reibungserhöhende Diamantbeschichtung wird unter der Bezeichnung EKAGRIP® vertrieben.

Des Weiteren wird in der EP 0 961 038 B1 ein Formkörper beansprucht, umfassend 2 Werkstücke sowie das zuvor genannte Verbindungselement, wobei die Eigenfestigkeit der federelastischen Folie mindestens so hoch ist wie die Eigenfestigkeit der zu fügenden Werkstücke; die Hartstoffpartikel aus einem Material mit einer Druck- und Scherfestigkeit bestehen, welche jene der zu fügenden Werkstücke übertrifft; und die Partikel in einer Bindephase mit einer Festigkeit eingebettet sind, die jener der zu fügenden Flächen der Werkstücke zumindest entspricht.

Die wesentlichen Nachteile der in der EP 0 961 038 B1 offenbarten Verbindungselemente sind in dem Artikel "Reibungserhöhende Oberflächenschichten für Torsionsbelastungen" von E. Leidich, J. Lukschandel et al., Antriebstechnik (40), 2001, S. 53 - 57, beschrieben. Dort ist u.a. ausgeführt, dass die mit EKAGRIP® beschichteten federelastischen Verbindungselemente bei einer Flächenpressung mit 100 MPa während der Torsionsbelastung zum Bruch neigen.

Des weiteren wird über Mikrorisse in der federelastischen Folie berichtet, die über das Eindringen der Diamantpartikel in die "vergleichsweise weiche" federelastische Stahlfolie induziert werden. Auch hier besteht die Gefahr eines Bruches infolge fortwährender Torsionsschubspannungen.

Ein durch einen Mikroriss oder sogar Bruch eines sokhen Verbindungselements verursachtes Versagen würde unweigerlich einen kapitalen Motorschaden bewirken. Angesichts der sich immer verschärfenden Produkt- und Produzentenhaftung ist ein solches Risiko für die Automobilindustrie nicht tragbar.

Aufgabe der vorliegenden Erfindung ist die Bereitstellung eines Verbindungselements, welches im Hinblick auf den geschilderten Stand eine nochmals verbesserte kraftschlüssige Verbindung torsionsschubbelasteter Bauteile ermöglicht, ohne dass eine Bruchbildung unter den im Artikel von E. Leidich, J. Lukschandel et al beschrieben Testbedingungen zu beobachten ist.

Diese Aufgabe wird erfindungsgemäß gelöst durch ein Verbindungselement der eingangs genannten Art, d.h. einem Verbindungselement zur reibungserhöhenden spielfreien reversiblen Verbindung von zu fügenden Werksstücken, bestehend aus einer Metallfolie, die an ihrer Oberfläche Hartstoffpartikel definierter Größe aufweist, die mittels einer metallischen Bindephase auf der Metallfolie fixiert sind, wobei die Metallfolie plastisch elastische Eigenschaften aufweist und die Partikel ausgewählt sind aus der Gruppe Siliciumcarbid oder Tetraborcarbid.

Entscheidend für die Lösung der zugrunde liegenden Aufgabe ist, dass die Metallfolie nicht aus einem federelastischen Material ausgewählt ist, wie es beispielsweise in der EP 0 961 038 81 beschrieben ist und dass keine arrondierten bzw. sphärischen Hartstoffpartikel (wie z.B. Diamantkörner) in der Bindemittelmatrix vorliegen, sondern deutlich scharfkantige Hartstoffpartikel, wie Kömer aus Siliciumcarbid oder Tetraborcarbid.

Ein solches erfindungsgemäßes Verbindungselement ermöglicht im Vergleich zur EP 0 961 038 erstmals eine Reibwerterhöhung von mehr 60 %. Auch unter einer Vorspannung von 100 MPa zeigte eine erfindungsgemäße 0.1 mm dicke Scheibe, die mit $10^7$ Lastwechseln dynamisch vorbelastet wurde, unter den zuvor geschilderten Testbedingen keinen Bruch.

Dies ist mehr als überraschend, da die scharfkantigen Hartstoffpartikel allein aus geometrischen Überlegungen heraus stärker einen durch Kerbwirkung induzierten Bruch bewirken sollten.

Auch die Tatsache, dass das als Trägermaterial verwendete plastisch elastische Metall, welches gegenüber einem federelastischen Material naturgemäß empfindlicher gegenüber mechanischem Eindringen ist, zusammen mit den scharfkantigen Hartstoffen letztlich nicht zur Bruchbildung führt ist bisher noch nicht vollständig erforscht.

Erste Untersuchungen deuten auf ein komplexes Zusammenspiel zwischen den Werkstoffeigenschaften der Hartstoffpartikel und denen des eingesetzten Grundmaterials hin. Die elastischen Eigenschaften des Grundmaterials weisen gegenüber den federelastischen Ausprägungen höhere Dämpfungseigenschaften auf, so dass möglicherweise weniger Spannungsspitzen im "Kerbgrund" auftreten können.

Unter dem Begriff "federelastisch" wird hier und im folgenden ein Werkstoff verstanden, dessen Längen- oder Formänderungen bei einem Zugversuch gemäß DIN EN 10 002 bei einer relativen Längenänderung des verwendeten Probenkörpers $\Delta l/l$ von höchstens 1 Promille (Streckgrenze oder kritische Spannung Sigma) vollständig reversibel (d.h. elastisch) sind, dessen Dehnungsmodul maximal 7 % (ohne Auftreten eines Kerbbruchs) und dessen Festigkeit nicht weniger als 1.000 N/mm² beträgt.

Unter dem Begriff "plastisch" wird hier und im folgenden ein Werkstoff verstanden, dessen Längen- oder Formänderungen bei einem Zugversuch gemäß DIN EN 10 002 bei einer relativen Längenänderung des verwendeten

Probenkörpers ∆I/I von mehr als 1 Promille (Streckgrenze oder kritische Spannung Sigma) nicht vollständig reversibel sind, ohne dass ein Bruch des Probenkörpers zu beobachten ist. Diese plastische Verformung ist der elastischen Dehnung überlagert.

Bei Entlastung kehrt der Probenkörper nicht mehr auf die Ausgangslänge zurück.

Unter dem Begriff "plastisch/elastisch" wird der Übergansbereich zwischen dem federelastischen und plastischen Zustand eines Werkstoffes verstanden.

Die Längen- oder Formänderungen eines Formkörpers aus einem solchen plastisch/elastischen Werkstoffes gemäß Zugversuch nach DIN EN 10 002 bei einer relativen Längenänderung des verwendeten Probenkörpers ∆I/I von mehr als 1 Promille ist nicht vollständig reversibel sind. Der Werkstoff weist eine Festigkeit von höchstens 1.000 N/mm$^2$ auf und zeigt auch bei einer Längendehnung von 8 % keinen Kerbbruch.

Gemäß einer bevorzugten Ausführungsform sind die Hartstoffpartikel Siliciumcarbid, Tetraborcarbid und/oder Bortetracarbid. Es können aber auch weiter, gleichgestaltete Carbide verwendet werden, sofern sie im Vergleich zu den eher abgerundeten Diamantpartikeln des Standes der Technik scharfkantig ausgebildet sind.

Besonders bevorzugt wird entsprechend einer weiteren erfindungsgemäßen Ausführungsform als metallische Bindephase eine chemisch abgeschiedene Nickel/Phosphorlegierung verwendet.

Solche Verbindungselemente zeichnen sich durch eine besonders konturenscharfe und -getreue Abbildung des die metallische Bindephase und Hartstoffe enthaltenden Überzuges in sehr engen Toleranzen aus, ohne dass der sonst übliche überproportionale Schichtaufbau im Bereich der Kanten zu beobachten ist. Auch ist in diesem Fall der reibungserhöhende Überzug planeben ohne Abweichung, was für die Lösung der dieser Erfindung zu Grunde liegenden Aufgabe durch das erfindungsgemäße Verbindungselement absolute Voraussetzung ist.

Gemäß dieser Ausführungsform weist die Matrix aus metallischer Bindephase und Hartstoffen in ihrer Gesamtheit eine um mehr als 30 % höhere Härte, verbesserte Duktilität sowie im Hinblick auf die hohen mechanischen Anforderungen im Bereich von Wellen/Naben-Verbindungen wesentlich günstigeres Elastizitätsmodul auf, verglichen mit einer Hartstoff-Matrix auf reiner Nickelbasis.

Besonders gute Ergebnisse hinsichtlich der reibungserhöhenden Eigenschaften der erfindungsgemäßen Verbindungselemente werden erzielt wenn die Hartstoffpartikel einen Durchmesser von nicht mehr als 19 µm haben.

Bevorzugt werden solche Hartstoffpartikel verwendet, deren mittlere Korngrößenverteilung zwischen 19 und 14 µm ± 1,5 liegt.

Diese Ausführungsform hat den weiteren Vorteil, dass eine optimale Kraftübertragung bei gleichzeitiger Vermeidung des Rutschens sichergestellt ist.

Die Oberfläche der Metallfolie des erfindungsgemäßen Verbindungselements ist vorzugsweise nicht mehr als 30 %, und insbesondere nicht weniger als 3 %, mit harten Partikeln belegt. Entsprechend einer besonders bevorzugten Ausführungsform der vorliegenden Erfindung liegt die Bedeckung der Metallfolie mit scharfkantigen Hartstoffpartikel zwischen 5 und 15 % der gesamten Oberfläche, die mit der reibungserhöhenden Matrix überzogen ist.

Es ist aber auch möglich, in die Bindephase und Hartstoffe aufweisende Matrix weitere Hartstoffe nach bewährten Verfahrensmustern des Standes der Technik einzubringen.

Diese Verfahrensvariante ist dann zu bevorzugen, wenn das erfindungsgemäße Verbindungselement neben den zuvor geschilderten Eigenschaften noch weitere spezielle Eigenschaften aufweisen soll, insbesondere wenn die Oberflächenbeschaffenheit des Fügepartners dies erfordern würde.

Die vorliegende Erfindung betrifft auch die Verwendung des zuvor beschriebenen Verbindungselements zur reibungserhöhenden spielfreien reversiblen Verbindung von mindestens zwei zu fügenden Werkstücken, insbesondere in einer Wellen/Naben-Verbindung, ganz besonders bevorzugt im Motorenbau.

Es lassen sich bei den chemischen NiP-Verfahren sehr gute Haftfestigkeiten auf dem Untergrund erzielen, die größtenteils besser sind als bei galvanischen Verfahren

In einer bevorzugten Verwendungsform ist die Eigenfestigkeit der mit Hartstoffpartikeln beschichteten Metallfolie mindestens so hoch, wie die Eigenfestigkeit der zu fügenden Werkstücke.

Dies hat den Vorteil, dass die Partikel sich in das Gegenstück des Fügepartners einpressen und dadurch ein Kraftschluß zustande kommt.

Auch besonders vorteilhaft ist, wenn die Partikel aus einem Material mit einer Druck- und Scherfestigkeit bestehen, welche jene der zu fügenden Werkstücke übertrifft.

Ebenfalls bevorzugt ist eine erfindungsgemäße Verwendung, bei der die Bindephase eine Festigkeit hat, die jener der zu fügenden Flächen der Werkstücke zumindest entspricht.

Eine möglichst hohe Reibungserhöhung der zu fügenden Werkstücke ist dann gegeben, wenn die Zahl der Partikel pro Flächeneinheit der Kontaktflächen der zu fügenden Werkstücke so gewählt ist, dass die zum Fügen der Werkstücke verfügbare Normalkraft ausreicht, um ein Eindrücken der Partikel in die Gegenfläche zu gewährleisten.

So ist ein möglichst optimaler Kraftschluß dann gegeben, wenn eine möglichst große Anzahl der auf der Oberfläche der Scheibe befindlichen Partikel ganz oder vollständig in das Gegenstück eingedrungen sind und die metallische Bindephase vollflächig am Gegenpartner anliegt.

Zur Bestimmung der reibungserhöhenden Eigenschaften sowie der Bruchneigung der erfindungsgemäßen Verbindungselemente wurden folgende Testuntersuchungen angewandt:

### Dynamische Untersuchung

Das Hauptaugenmerk der Untersuchungen war auf die dynamischen Versuche gerichtet, wobei die zu untersuchenden Verbindungselemente bei einer Flächenpressung von 100 MPa verwendet wurden. Es wurden drei unterschiedliche Belastungsvarianten ausgewählt:

- schwellende Torsion mit $10^7$ Lastwechsel bei 80 % des gemäß **Kap. 2.1** ermittelten Rutschmomentes und danach Bestimmung des jeweiligen statischen Rutschmomentes
- schwellende Torsion mit $10^7$ Lastwechsel bei 80 % des gemäß Kap. 2.1 ermittelten Rutschmomentes, Demontage der Verbindung, Wiedermontage der Verbindung, Belastung mit schwellender Torsion mit $10^7$ Lastwechsel bei wiederum 80 % des Rutschmomentes und schließlich statisches Durchrutschen
- Bestimmung des dynamischen Rutschmomentes durch stufenweise Laststeigerung

Jede Belastungsvariante wurde mit dem erfindungsgemäßen Verbindungselement und einem Verbindungselement gemäß der EP 0 961 038 B1 unter Einsatz beider Werkstoffpaarungen mit je zwei Versuchen getestet. Es ergaben sich also 6 Versuche mit der Prüfkörperpaarung 16MnCr5 / GG25 und 6 Versuche mit 16MnCr5 / 16MnCr5 (16MnCr5 jeweils einsatzgehärtet).

Das Prinzip der Untersuchungen, d.h. der Lasteinleitung beim Torsionsversuch, ist in **Darstellung 1** dargestellt. Das zu untersuchende Verbindungselement wird zwischen beide Prüfkörper eingelegt. Durch die Vorspannkraft $F_V$ wird an der Scheibe die gewünschte Flächenpressung erzeugt. in das zu untersuchende Verbindungselement wird nun ein Torsionsmoment $T_R$ eingeleitet.

### Darstellung 1

### Prinzip der Lasteinteilung bei Torsionsversuch

Wie sich schon aus dem Prinzip der Lasteinteilung ableiten lässt, sind die zwei wichtigsten Messgrößen die Vorspannkraft $F_V$ und das Torsionsmoment $T_R$. Daneben ist auch die Aufzeichnung des Verdrehwinkels von Bedeutung, um den Augenblick des Durchrutschens genau erfassen zu können.

Zur Durchführung der Versuche wurde der Torsionsprüfstand mit einer kraft- und wegsteuerbaren Hydraulikanlage verwendet.

Die lineare Bewegung des Hydraulikkolbens wird über einen Hebel in eine Drehbewegung der Welle umgesetzt. Damit keine Querkräfte in die untersuchte Verbindung eingeleitet werden, ist vor die Messwelle noch eine biegeweiche Kupplung eingebaut worden. Die beiden zylindrischen Probekörper sind in der Torsionsmesswelle und in dem Aufnehmer eingespannt, wie schematisch in **Darstellung 2** gezeigt. Dazwischen wird das zu untersuchende Verbindungselement eingelegt und die ganze Verbindung entsprechend der gewünschten Flächenpressung mit einer M14 Schraube axial vorgespannt. Die Kraftübertragung zwischen der Kupplung und der Messwelle wird formschlüssig durch eine Passfederverbindung realisiert. Das selbe Prinzip wird dann auch bei der Ableitung des Drehmomentes ins Gestell genutzt.

**Darstellung 2**

**Ansicht der Verspanneinrichtung (Explosionsdarstellung)**

Die Vorspannkraft $F_v$ wird mittels einer 200 kN Kraftmessdose gemessen. Zur Ermittlung des Drehmomentes wurden auf die speziell gefertigte Messwelle Dehnungsmessstreifen in den Hauptspannungsrichtungen unter dem Winkel von 45° geklebt. Wie aus **Darstellung 3** ersichtlich wird die Verdrehung zwischen den Prüfkörpern der zu untersuchenden Verbindung über einen Hebel mittels eines induktiven Wegtasters ermittelt. Zur Signalverstärkung und Weiterverarbeitung dient ein Mehrkanal-Messverstärker sowie ein PC.

**Darstellung 3**

**Längsschnitt der Verspanneinrichtung**

**Versuchsdurchführung:**

**Dynamische Vorbelastung**

Das Versuchsprogramm legt bei der dynamischen Vorbelastung eine schwellende Torsion mit $10^7$ Lastwechsel bei 80 % des statischen Rutschmomentes fest. Als statischer Referenzwert (100 %) wurde der Mittelwert aus den statischen Vorversuchen angenommen.

Die gelieferten Prüfkörper werden vor dem Versuch aus dem schutzpapier ausgepackt und die mit der beschichteten Folie sich berührenden Funktionsflächen mit Entfetter gesäubert. Danach wird einer der Prüfkörper in die Messwelle und einer in den Aufnehmer eingelegt und mit einem Keil und einer M 10-Schraube verspannt. Nun wird die Messwelle in den Prüfstand eingebaut. Auf die Vorspannschraube, die sich im Aufnehmer befindet, wird die Hülse mit geprüfter Folie angezogen und die Verbindung zusammengesetzt. Die Vorspannkraft $F_v$ wird mittels einer M14-Schraube erzeugt und an der Kraftmessdose gemessen. Die erwünschte Flächenpressung von 100 MPa entspricht einer Vorspannkraft von $FV$ = 31,4 kN. Der Versuchsstand steht jetzt für die Belastung bereit. Mit der Steuerung der servohydraulischen Anlage wird die mit 35 Hz pulsierende Kolbenkraft so eingestellt, dass das erforderliche schwellende Torsionsmoment dem Sollwert entspricht. Die Messgrößen (Vorspannkraft $FV$, Torsionsmoment $TR$ und Verdrehwinkel $\varphi$) werden während der dynamischen Vorbelastung alle 180 Sekunden aufgenommen und die Werte im Rechner gespeichert (periodische Messung). Nach $10^7$ Lastwechsel schaltet die Hydraulikanlage automatisch aus und die dynamische Vorbelastung ist beendet.

**Wiedermontage**

Bei der Versuchsvariante mit Wiedermontage wird die Verbindung nach der dynamischen Vorbelastung demontiert. Die Vorspannschraube wird gelöst und die Prüffolie herausgenommen, wobei die Prüfkörper im Aufnehmer bzw. in der Messwelle verbleiben. Die Verbindung wird danach gleich wieder zusammengesetzt und vorgespannt. Im Weiteren erfolgt ein zweiter dynamischer Belastungszyklus, der mit dem ersten identisch ist (80 % des statischen Rutschmomentes, $10^7$ Lastwechsel).

**Statisches Durchrutschen**

Nachdem die Prüfkörper dynamisch vorbelastet wurden, folgt die Bestimmung des statischen Rutschmomentes. Die Verbindung bleibt nach der Vorbelastung zusammengebaut, nur die Messtechnik wird auf eine Dauermessung umgestellt. Alle Messgrößen werden in Echtzeit während des ganzen Versuches mit einer Abtastrate von 100 Hz aufgenommen.

Aus dem unbelasteten Zustand heraus wird die Kolbenkraft der Hydraulik kontinuierlich gesteigert. Beim Erreichen der Verdrehgrenze, die mit einem Verdrehwinkel von 4° bestimmt ist, schaltet die Hydraulik aus, die Verbindung wird entlastet und der Versuch ist beendet.

Aus den aufgenommenen Daten lässt sich beim Auswerten ein Torsionsmoment/Verdrehwinkel-Diagramm **(Darstellung 4)** erstellen, auf dem der Verlauf des ganzen Versuches gut beobachtbar ist. Der Augenblick des Durchrutschens ist durch das gekennzeichnete Maximum dabei deutlich zu erkennen.

**Darstellung 4**

**Torsionsmoment/Drehwinkel-Diagramm**

Der Reibwert wird aus dem Durchrutschmoment und weiteren Größen wie folgt berechnet:

$$\mu = \frac{2 \cdot T_R}{D_m \cdot F_v}$$

mit $T_R$ = Durchrutschmoment
$F_v$ = Vorspannkraft
$D_m$ = mittlerer Durchmesser der ringförmigen Flächen

**Dynamisches Durchrutschen**

Bei den Versuchen mit dynamischem Durchrutschen erfolgt die Montage des Versuchsstandes so wie bereits im Abschnitt 4.1 beschrieben. Die Messinstrumente werden nun wieder auf eine periodische Messung eingestellt, wobei die Zeit zwischen zwei Messungen auf 5 Sekunden reduziert wurde. Dies ermöglicht eine gute Beobachtung des Versuches und führt nicht zu einer Speicherüberforderung.
Der Versuch beginnt mit einer schwellenden Torsionsbelastung (35 Hz), die weit unter dem erwarteten Rutschmoment liegt. In kleinen Schritten wird das Mittelmoment *TRm* und die Momentenamplitude *TRa* gesteigert, so dass das Momentenmaximum *TRo* steigt und das Minimum *TRu* nah an Null bleibt, wie aus **Darstellung 5** ersichtlich.

**Darstellung 5**

**Schwellendes Torsionsmoment**

Zwischen den Lastschritten erfolgen etwa 500 bis 1.000 Lastwechsel. Der Versuch wird nach Überschreiten der Verdrehwinkelgrenze wieder automatisch abgebrochen und beendet. Aus den Messwerten lassen sich zwei Diagrammtypen erstellen, **Darstellung 6.** Im Torsionsmoment-ZeitDiagramm ist vor allem die Laststeigerung dargestellt. In dem Moment-Verdrehwinkel-Diagramm ist dagegen das Durchrutschen sehr gut ablesbar.

**Darstellung 6**

**Schwellendes Torsionsmoment**

Die folgenden Beispiele dienen der Erläuterung der Erfindung.

**Beispiel (erfindungsgemäß):**

Zur Herstellung eines erfindungsgemäßen Verbindungselements werden zunächst ringförmige Scheiben in den Abmessungen d 27/15 * 0,1 mm bzw. 2,0 mm aus unbeschichtetem 0,1 mm dickem Blech sowohl aus einem C75- als auch Ck75-Stahl gestanzt.
Danach werden in einem Härtungsprozeß die Scheiben bei einer Temperatur von 830 °C, einer Haltezeit von 1 Minute/mm und einer Abschreckung in Öl gehärtet. Die Härte beträgt 64 HRC. Anschließend wird die gehärtete Scheibe einer Wärmebehandlung bei einer Temperatur von 540 °C und einer Haltezeit von 30 Minuten unterzogen und auf eine Zugfestigkeit von 970 N/mm$^2$ angelassen.
Zur Bestimmung der mechanischen Eigenschaften wird ein Zugversuch gemäß DIN EN 10 002 unter Verwendung einer Probeform gemäß DIN 50 125 - B14 * 70 durchgeführt.

Die Probe zeigt oberhalb der Streckgrenze, d.h. einer relativen Längenänderung $\Delta l/l$ der Probeform von mehr als 1 Promille (auch als kritische Spannung $\sigma_s$ bezeichnet), eine nicht vollständig reversible Längen- oder Formänderungen, ohne dass dabei der Probenkörper bricht.

Der Probenkörper weist folglich plastisch/elastische Eigenschaften auf.

Nach der Wärmebehandlung werden die Verbindungselemente auf eine geeignete Halterungen gesteckt und entsprechend den im Handbuch "Die AHC-Oberfläche - Handbuch für Konstruktion und Fertigung", 4. Auflage, Kerpen, der Fa. AHC beschriebenen Vorbehandlungsverfahren entfettet, gebeizt und aktiviert.

Dann werden die Scheiben mit Halterung in eine Mischung eines handelsüblichen chemisch Nickel-Elektrolyten, der unter der Bezeichnung DNC 520 von der Fa. AHC, Kerpen, erhältlich ist, mit 250 mg/l SiC (F600 von der Fa. SaintGobain) getaucht..

Der pH-Wert des Elektrolyten wird mit Ammoniakwasser 12,5 % auf den Wert 4,5 - 5,0 eingestellt, die Temperatur des Elektrolyten beträgt 85 - 90°C.

Die Abscheidungsgeschwindigkeit beträgt 7 - 9 $\mu$m/Stunde, wobei das Gestell während des Beschichtungsvorganges in Bewegung gehalten wird.

Der Elektrolyt wird mit einer Pumpe umgewälzt und in Bewegung gehalten, so dass sich im Elektrolyten befindliche Hartstoffpartikel nicht auf dem Boden des Beschichtungsbehälters absetzen können.

Die Tauchzeit beträgt 60 Minuten. Dann wird die Halterung mit den beschichteten Scheiben aus dem Elektrolyten genommen und in einem Ultraschallbad gereinigt, um lose anhaftende SiC-Partikel zu entfernen.

Die so hergestellte Scheibe wurde der zuvor beschriebenen dynamischen Untersuchung mit einer Vorspannung von 100 MPa und einer Vorbelastung von $10^7$ Lastwechseln untersucht. Die Ergebnis sind in der **Tabelle I** dargestellt.

Dann wird das erfindungsgemäße Verbindungselement mittels eines metallographischen Querschliffs abgebildet (vgl. **Abbildung 7**).

Die mittlere Schichtdicke der NickeVPhosphor-Matrix beträgt 7 $\mu$m, die gravimetrisch bestimmte Belegungsdichte an Hartstoffpartikeln auf der Oberfläche beträgt 17 Flächen-%.

Die folgende Darstellung 7 zeigt die schlifftechnische Untersuchung des so hergestellten Verbindungselements. Deutlich zu erkennen sind die scharfkantigen Siliciumcarbidteilchen in der Matrix.

**Darstellung 7**

**Lichtmikroskopische Aufnahme eines ätzpolierten Schliffs eines erfindungsgemäßen Verbindungselements mit SiC (M 500 : 1)**

**Vergleichsbeispiel (gem. EP 0 961 038):**

Das zuvor beschriebene Beispiel wird wiederholt, jedoch wird die Scheibe nach dem Härtungsprozeß keiner Wärmebehandlung unterzogen und anstelle der Siliciumcarbidpartikel wird handelsübliches Diamantpulver mit einem mittlerem Partikeldurchmesser von 10 Mikrometer (erhältlich von der Fa. GE Super Abrasives Europe GmbH) verwendet.

Zur Bestimmung der mechanischen Eigenschaften wird ein Zugversuch gemäß DIN EN 10 002 unter Verwendung einer Probeform gemäß DIN 50 125 - 814 * 70 durchgeführt.

Die Probe zeigt unterhalb der Streckgrenze. d.h. einer relativen Längenänderung $\Delta l/l$ der Probenform von mehr als 1 Promille (auch als kritische Spannung $\sigma_S$ bezeichnet), eine vollständig reversible Längen- und Formänderungen. Oberhalb der Streckgrenze bricht der Probenkörper.

Der Probenkörper weist folglich federelastische Eigenschaften auf.

Die so hergestellte Scheibe wurde der zuvor beschriebenen dynamischen Untersuchung mit einer Vorspannung von 100 MPa und einer Vorbelastung von $5* 10^6$ Lastwechseln untersucht.

Die Ergebnisse sind in der **Tabelle I** dargestellt.

Die folgende **Darstellung 8** zeigt die lichtmikroskopische Aufnahme eines ätzpolierten Schliffes des Vergleichsbeispiels. Deutlich zu erkennen sind die arrondierten Diamantteilchen in der Matrix.

Die mittlere Schichtdicke der Nickel/Phosphor-Matrix beträgt 7 μm, die gravimetrisch bestimmte Belegungsdichte an Hartstoffpartikeln auf der Oberfläche beträgt 11 Flächen-%.

**Darstellung 8**

**Lichtmikroskopische Aufnahme eines ätzpolierten Schliffs eines Verbindungselements mit Diamant (M 500 : 1) (Vergleichsbeispiel)**

**Tabelle I Gegenüberstellung der dynamischen Untersuchungergebnisse:**

| Paarung Prüfkörper | Beispiel (erfindungsgemäß) | Vergleichsbeispiel |
|---|---|---|
| GG25 / 16MnCr5 | 0,54 | 0,33 |
| 16MnCr5 / 16MnCr5 | 0,53 | 0,38 |

Die **Tabelle I** zeigt eine Erhöhung der Reibwerte um 39 bzw. 63 %. Dabei ist zu beachten, dass das erfindungsgemäße Verbindungselement doppelt so viele Vorbelastungen erfahren hat als das entsprechend dem Stand der Technik.

**Patentansprüche**

1.  Verbindungselement zur reibungserhöhenden spielfreien reversiblen Verbindung von zu fügenden Werksstücken, bestehend aus einer Metallfolie, die an ihrer Oberfläche Hartstoffpartikel definierter Größe aufweist, wobei die Partikel mittels einer metallischen Bindephase auf der Metallfolie fixiert sind, **dadurch gekennzeichnet, dass** die Metallfolie plastisch elastische Eigenschaften aufweist und die Partikel ausgewählt sind aus der Gruppe Siliciumcarbid oder Tetraborcarbid.

2.  Verbindungselement nach Anspruch 1, **dadurch gekennzeichnet, dass** die metallische Bindephase eine chemisch abgeschiedene NickeVPhosphorlegierung ist.

3.  Verbindungselement nach Anspruch 1 oder 2, **dadurch gekennzeichnet, dass** die Hartstoffpartikei einen Durchmesser von nicht mehr als 19 $\mu$m haben.

4.  Verbindungselement nach einem der vorhergehenden Ansprüche, **dadurch gekennzeichnet, dass** nicht mehr als 30 % und nicht weniger als 3 % der Oberfläche der Metallfolie mit harten Partikeln belegt ist

5.  Verbindungselement nach einem der vorhergehenden Ansprüche, **dadurch gekennzeichnet, dass** die Hartstoffpartikel 5 bis 15 % der Metallfolie bedecken.

6.  Verwendung eines Verbindungselements nach einem der vorhergehenden Ansprüche zur reibungserhöhenden spielfreien reversiblen Verbindung von mindestens zwei zu fügenden Werkstücken.

7.  Verwendung nach Anspruch 6, **dadurch gekennzeichnet, dass** die Eigenfestigkeit der mit Hartstoffpartikeln beschichteten Metallfolie mindestens so hoch ist wie die Eigenfestigkeit der zu fügenden Werkstücke.

8.  Verwendung nach Anspruch 6 oder 7, **dadurch gekennzeichnet, dass** Partikel aus einem Material mit einer Druck- und Scherfestigkeit bestehen, welche jene der zu fügenden Werkstücke übertrifft.

9.  Verwendung nach einem der Ansprüche 6 bis 8, **dadurch gekennzeichnet, dass** die Bindephase eine Festigkeit hat, die jener der zu fügenden Flächen der Werkstücke zumindest entspricht.

10. Verwendung nach einem der Ansprüche 6 bis 9, **dadurch gekennzeichnet, dass** die Zahl der Partikel pro Flächeneinheit der Kontaktflächen der zu fügenden Werkstücke so gewählt ist, dass die zum Fügen der Werkstücke verfügbare Normalkraft ausreicht, um ein Eindrücken der Partikel in die Gegenfläche zu gewährleisten.

11. Verwendung nach einem der Ansprüche 6 bis 10 in einer Wellen/Naben-Verbindung, insbesondere im Motorenbau.

**Claims**

1.  Connecting element for friction-enhancing, tightly fitting, reversible connecting of workpieces to be joined, consisting of a metal foil exhibiting, at its surface, hard material particles of defined size, the particles being fixed on the metal foil by a metallic binding phase, **characterised in that** the metal foil exhibits plastic elastic properties and the particles are selected from the group of silicon carbide or tetraboron carbide.

2.  Connecting element according to claim 1 **characterised in that** the metallic binding phase is a chemically deposited nickel/phosphorus alloy.

3.  Connecting element according to claim 1 or 2 **characterised in that** the hard material particles have a diameter of not more than 19 $\mu$m.

4.  Connecting element according to one of the preceding claims **characterised in that** not more than 30 % and not less than 3 % of the surface of the metal foil is covered with hard particles.

5.  Connecting element according to one of the preceding claims **characterised in that** the hard material particles cover 5 to 15 % of the metal foil.

6.  Use of a connecting element according to one of the preceding claims for friction-enhancing, tightly fitting, reversible connecting of at least two workpieces to be joined.

7.  Use according to claim 6 **characterised in that** the inherent strength of the metal foil coated with hard material particles is at least as high as the inherent strength of the workpieces to be joined.

8. Use according to claim 6 or 7 **characterised in that** the particles consist of a material with a compressive and shear strength which exceeds that of the workpieces to be joined.

9. Use according to one of claims 6 to 8 **characterised in that** the binding phase has a strength which at least corresponds to that of the surfaces of the workpieces to be joined.

10. Use according to one of claims 6 to 9 **characterised in that** the number of particles per surface unit of the contact surfaces of the workpieces to be joined is selected in such a way that the normal force available to join the workpieces is sufficient to ensure the particles being pressed into the counter-surface.

11. Use according to one of claims 6 to 10 in a shaft/hub connection, in particular in engine building.

**Revendications**

1. Elément de jonction pour l'assemblage réversible sans jeu et augmentant le taux de friction des pièces à assembler, constitué d'une feuille de métal présentant à sa surface des particules d'une matière dure de taille définie, ces particules étant fixées sur la feuille de métal au moyen d'une phase liante métallique, **caractérisé en ce que** la feuille de métal présente des propriétés plastiquement élastiques et les particules sont choisies parmi le groupe du carbure de silicium ou du carbure de tétrabore.

2. Elément de jonction selon la revendication 1, **caractérisé en ce que** la phase liante métallique est un alliage nickel/phosphore chimiquement séparé.

3. Elément de jonction selon l'une des revendications 1 ou 2, **caractérisé en ce que** les particules de matière dure ont un diamètre ne dépassant pas 19 $\mu$m.

4. Elément de jonction selon l'une des revendications précédentes, **caractérisé en ce que** pas plus de 30 % et pas moins de 3 % de la surface de la feuille de métal ne sont garnis de particules dures.

5. Elément de jonction selon l'une des revendications précédentes, **caractérisé en ce que** les particules de matière dure recouvrent 5 à 15 % de la feuille de métal.

6. Utilisation d'un élément de jonction selon l'une des revendications précédentes pour l'assemblage réversible sans jeu et augmentant le taux de friction d'au moins deux pièces à assembler.

7. Utilisation selon la revendication 6, **caractérisée en ce que** la stabilité inhérente de la feuille de métal recouverte de particules de matière dure est au moins aussi élevée que la stabilité inhérente des pièces à assembler.

8. Utilisation selon l'une des revendications 6 ou 7, **caractérisée en ce que** les particules sont composées d'une matière ayant une résistance à la pression et au cisaillement supérieure à celle des pièces à assembler.

9. Utilisation selon l'une des revendications 6 à 8, **caractérisée en ce que** la phase liante a une résistance correspondant au moins à celle des surfaces de jonction des pièces à assembler.

10. Utilisation selon l'une des revendications 6 à 9, **caractérisée en ce que** le nombre de particules par surface de contact des pièces à assembler est choisi de sorte que la force normale disponible pour assembler les pièces est suffisante pour garantir la pénétration des particules dans la surface opposée.

11. Utilisation selon l'une des revendications 6 à 10 dans la jonction des arbres/moyeux, notamment dans la construction des moteurs.